# EUROPEAN PATENT SPECIFICATION

(11) **EP 3 340 331 B1**
(45) Date of publication and mention of the grant of the patent: **14.04.2021**
(21) Application number: 16205506.5
(22) Date of filing: 20.12.2016
(51) Int. Cl.: H01M 2/02, H01M 2/34, H01M 10/48

(54) **DAMAGE IDENTIFICATION SYSTEM FOR ELECTROCHEMICAL ENERGY STORAGES**
BESCHÄDIGUNGSERKENNUNGSSYSTEM FÜR EINEN ELEKTROCHEMISCHEN SPEICHER
SYSTÈME D'IDENTIFICATION DE DÉGÂTS POUR UN ACCUMULATEUR ÉLECTROCHIMIQUE

(43) Date of publication of application: 27.06.2018
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: FRIEDRICH, Marco, 71638 Ludwigsburg (DE); BUTZMANN, Stefan, 58579 Schalksmühle (DE)
(74) Representative: Isarpatent

(56) References cited:
- DE-A1-102011 120 505
- US-A1- 2014 065 453

## Description

The present invention relates to an electrochemical storage device comprising a damage identification system.

US 2014/065453 A1 discloses a battery including a damage identification system implemented in the battery housing with two electrically conductive foils separated by an insulating layer. The two electrically conductive foils are connected to one battery electrode, respectively. The insulating layer is predisposed to break when the battery housing is deformed so as to provide a contact between the two electrically conductive foils which discharges the battery over a resistor DE102011120505A1 discloses a battery including a jelly roll and a damage identification system involving an electrically conductive layer formed in the battery housing.

It is known from the prior art that potential risks inhere in electrochemical energy storages, particularly in battery cells. Such risks might include electrical failures like short circuits and/or chemical processes like thermal runaway, i.e. exothermic reactions in response to failures. Such potential risks usually influence the design of electrical driven vehicles which have electrochemical energy storages. Such electrochemical energy storages are constructed to provide huge currents while storing a huge energy density. At the same time, extensive requirements regarding safety have to be regarded when employing such electrochemical energy storages in vehicles.

Electrochemical energy storages for electrically driven vehicles usually comprise several battery cells which are connected in series. A predefined number of cells is collected in single modules, wherein each module is provided with sensors for monitoring each battery cell. A group of such modules set up the battery system which comprises a central control unit. The central control unit collects the data recorded by the sensors and is adapted for performing simple control actions like shutting down the battery system in case of failure. In most cases, the battery cells are lithium-ion cells.

Battery cells usually comprise several flat sheets of carrier material and chemical substrates for the electrochemical reaction within each battery cell. After adding several of those sheets, the whole structure is rolled in a round of flat shape. In this way battery cells known as jelly rolls are created. Each battery cell comprises one ore more such jelly rolls which act as an individual source of energy. The single jelly rolls are electrically connected to set up a battery cell with a predetermined electric potential.

From the prior art, measures are known to prevent critical cell behavior in case of physical damages. For example, DE 10 2012 005 979 A1 discloses a bridging element for isolating damaged battery cells. However, no reliable provisions for recognizing mechanical damages are known.

### Disclosure of the invention

The invention provides an electrochemical storage device comprising damage identification system according to claim 1.The damage identification system can be adopted for monitoring different sub-units of a battery system or a whole battery system. The damage identification system allows for monitoring the electrochemical energy storage such that mechanical damages can be identified reliably and quickly. Any battery cell having such an identification system allows a reliable identification of mechanical damages while the risk for false positives is minimized. In this way it is ensured that the battery system is shut down only in case one of the battery cells is physically damaged.

The damage identification system comprises an electroconductive first contact element, an electroconductive second contact element and an electric isolating member. The first contact element and the second contact element have a plate like shape and are arranged in parallel to each other. The electrically isolating member is provided between the first contact element and the second contact element and ensures that the first contact element and the second contact element are separated and/or electrically isolated from each other. Further, the damage identification system comprises a logical unit. The logical unit is adapted to identify a contact between the first contact element and the second contact element.

As soon as such a contact is identified by the logical unit, it can be concluded that the damage must be present. A contact between the first contact element and the second contact element is due to the above sign only possible in case the isolating member is damaged. Particularly, this means that the damage identification system has ether been penetrated by a electroconductive element which electrically connects the first contact element and the second contact element by piercing through the isolating member or the damage identification system has been subjected to a huge external force which presses the first contact element and the second contact element together. In any case, there is the risk that the electrochemical energy storage is also damaged. Therefore, damage identification system can identify this damage and initiates reasonable countermeasures. Those countermeasures might be activating a bridging element or a fast discharging device. Since countermeasures are known from the prior art, a detailed explanation is omitted.

The dependent claims show advantageous embodiments of the invention In one embodiment of the invention, the logical unit is adapted to monitor each of the electrical potential of the first contact element and second contact element. Based on a these electrical potentials, the logical unit can identify whether or not a contact between the first contact element and the second contact element is present. In particular, in case the relative electrical potential between the first contact element and a second contact element becomes zero or the electrical potential of the first contact element and electrical potential of the second contact element become the same, it is identified that a contact must be present between the first contact element and the second contact element. As explained above, any contact between the first contact element and a second contact element is regarded a damage.

According to the invention, the logical unit and at least one battery cell of the electrochemical energy storage device and the first contact element and the second contact element are connected to an open circuit for supplying electrical power to the logical unit. This circuit can only be closed due to a contact between the first contact element and the second contact element. Therefore, damage will be identified as soon as the logical unit is supplied electrical power. The logical unit is adapted to execute countermeasures as explained above. This means, the countermeasures would only be executed as soon as the logical unit is supplied with electrical power, which is only the case when the first contact element and the second contact element contact each other, in case there is a damage. Such a design implies that the part of the electrochemical energy storage device, which is monitored by the damage identification system, supplies enough power for the logical unit.

Preferably, the first contact element and/or the second contact element are made of electroconductive foils. Further, the isolating member might be a separator provided within electrochemical energy storage device. The electroconductive foils preferably are arranged around the electrochemical energy storage device such that electrochemical energy storage device is monitored regarding damages. The foils preferably can be adapted to and use of the electrochemical energy storage device such that a safe and secure monitoring of the chemical energy storage device is enabled.

The isolating member preferably is constructed to collapse and allow a contact between the first contact element and the second contact element as soon as an external force exceeds a predetermined value. Particularly, the isolating member comprises a structure having openings, wherein these openings define predetermined breaking points of the isolating member. Therefore, no additional member has to penetrate the damage identification system in order to identify damage. The damage identification system also is enabled to identify damage caused by huge forces, particularly by forces which exceed the predetermined value.

The logical unit of the damage identification system preferably comprises a fast discharge device for discharging the electrochemical energy storage device in case of identified damage. The fast discharge device preferably is directly electrically connected to the first contact element or the second contact element. The one of the first contact element and second contact element, which is not connected to the fast discharge device, preferably is electrically connected to one of the terminals or one of the electrodes of the electrochemical energy storage device. This allows the damage identification device functioning as a switch such that the discharge device is activated as soon as the first contact element and the second contact element are connected because of damage. No further logical elements are necessary. Additionally or alternatively, the logical unit comprises a bridging device for bridging the electrochemical energy storage device in case of identified damage. In both solutions, critical behavior of the electrochemical energy storage device is avoided by discharging or isolating the electrochemical energy storage device.

The electrochemical energy storage device comprises at least one jelly roll. The damage identification system is provided on an outer surface of said jelly roll. Particularly, each jelly roll or a group of jelly rolls might be placed inside of a housing, wherein the damage identification system is provided on said housing. Therefore, the electrochemical energy storage device can be provided with damage identification system in a scalable manner. Depending on a required degree of fineness, a damage identification system could be provided for each single jelly roll or for a group of jelly rolls.

The at least one jelly roll comprises at least one housing and the isolating member and the first contact element are provided inside the housing. With the outer surface of the housing acting as the second contact element, a thin and low volume design of the electrochemical energy storage device can be reached.

The first contact element or the second contact element are preferably directly or via an electric resistance electrically connected to one electrode of the jelly roll. In this way, the first contact element or the second contact element have the same electrical potential as the electrode of the jelly roll. In a further preferred embodiment, one of the first contact element and a second contact element is directly connected to one of the electrodes of the jelly roll while the other one of the first contact element and the second contact element is connected via said electric resistance to another electrode of the jelly roll. In an alternative solution, one of the first contact element and a second contact element might be connected to a floating potential.

### Description of the drawings

Specific embodiments of the invention are now described together with the attached drawings. In the drawings
- Figure 1: is a schematic view of an electrochemical energy storage device comprising a damage identification system,
- Figure 2: is a schematic view of the electrochemical energy storage device comprising the damage identification systemduring penetration,
- Figure 3: is a schematic view of a first alternative of an isolating member of the damage identification system,
- Figure 4: is a schematic view of a second alternative of an isolating member of the damage identification system,
- Figure 5: is a schematic view of the damage identification system with and without an external force,
- Figure 6: is a schematic diagram of a voltage of an electrochemical energy storage device and one of contact elements of the damage identification system,
- Figure 7: is a schematic view of a damage identification system according to a first embodiment of the invention, and
- figure 8: is a schematic view of a damage identification system according to a second embodiment of the invention.

### Embodiments oft he invention

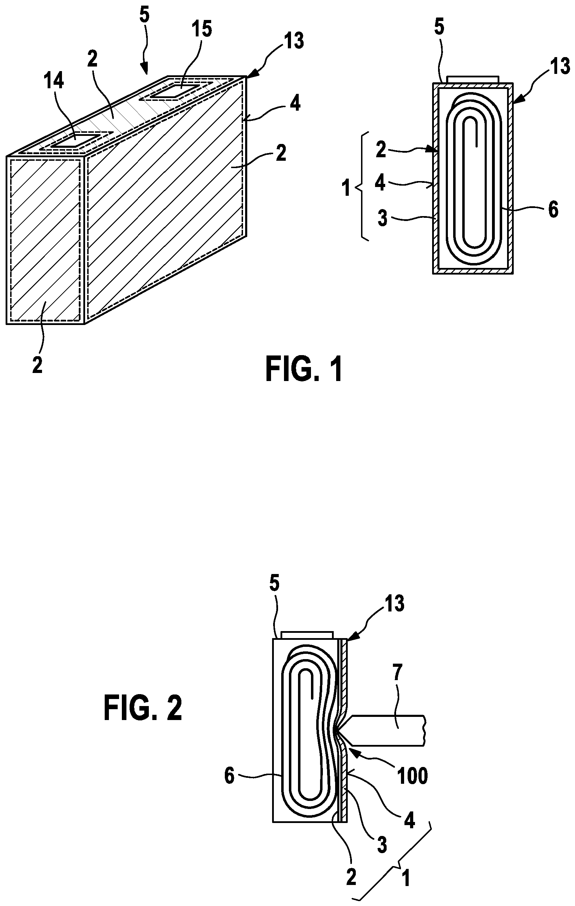

Figure 1 is a schematic view of an electrochemical energy storage device 5. Said electrochemical energy storage device 5 comprises a damage identification system 1. In figure 1, the electrochemical energy storage device 5 is shown from two different views.

The electrochemical energy storage device 5 comprises a housing 13. The housing 13 is provided with a first terminal 14 and a second terminal 15, wherein electrical power can be taken from the first terminal at 14 and the second terminal 15. At least parts of the housing 13 are made of electroconductive material.

The damage identification system 1 comprises a first contact element 2 and a second contact element 4. The second contact element 4 corresponds to a said outer surface of the housing 13. The first contact element 2 is provided inside the housing 13 and is separated from the outer surface of the housing by an isolating member 3. The isolating member 3 might be a plastic film or a separate a jelly roll. Due to the isolating member 3, the first contact element is electrically isolated from the second contact element 3.

Both, the first contact element 2 and the second contact element 4 are made of electroconductive material. As explained above, the second contact element 4 corresponds to the outer surface of the housing 13, which preferably is made of electroconductive material. The first contact element 2 preferably is made from a metal film.

Further, a jelly roll 6 is provided inside the housing 13. The jelly roll 6 is made from adding a first electrode, a second electrode, and a separator and rolling those components to a flat shape. The electrodes are then connected to the first terminal 14 and the second terminal 15. Further, the second contact element 4, i.e. the outer surface of the housing 13, is electrically connected to one of the electrodes of the jelly roll 6. The first contact element 2 is electrically connected to a different electrical potential, particularly to a floating potential or a predefined potential, which is determined via a electrical resistance between a electric connection of the first contact element 2 and one of the electrodes of the jelly roll 6.

As can be seen from figure 1, the damage identification system 1 extends nearly over the whole housing 13 such that nearly the whole electrochemical energy storage device 5 can be monitored regarding damages. Such a damage is shown in figure 2. As can be seen from figure 2, a nail 7 penetrates the electrochemical energy storage device 5. Particularly, the nail 7 pierces through the housing 13 and through isolating member 3. Therefore, the nail partly electrically connects the housing 13, i.e. the second contact element 4, and the first contact element 2. Due to the connection of the first contact element 2 and the second contact element 4, damage of the electrochemical energy storage device 5 is identified. This will be explained afterwards.

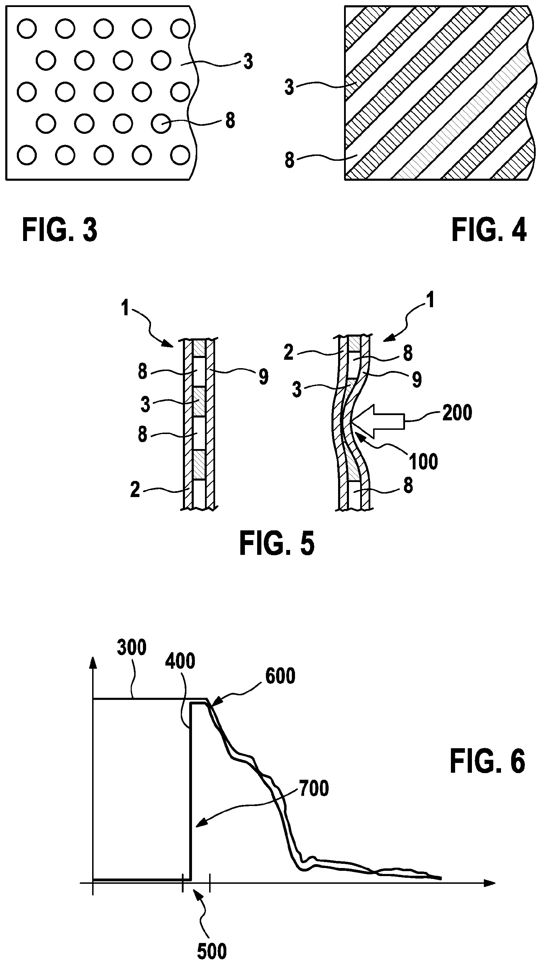

Different solutions of the damage identification system 1 are shown in figure 3 to 5. Figures 3 and 5 are schematic views of an isolating member 3. The isolating member 3 comprises several openings 8 which are shaped as through holes (figure 3) or as slots (figure 4). The openings 8 define predetermined breaking points such that the isolating member collapses as soon as an external force 200 (cf. figure 5) exceeds a predetermined value. Particularly, this predetermined value defines a boundary of a maximum external force 200 which is allowed to act on the electrochemical energy storage device 5. As soon this boundary is exceeded, there is a risk of damage of the jellyroll 6 which is provided inside the electrochemical energy storage device 5.

Figure 5 shows an alternative damage identification system 1, which is not part of the claimed invention. On the left side, the damage identification system 1 is shown without external force, on the right side, an external force 200 acts on the damage identification system 1.

The damage identification system 1 comprises a first connection element 2 and the second connection element 9, which both are made from metal foils. Between those metal foils, and isolating member 3 is shown in figure 3 or figure 4 is provided. Such a damage identification system 1 can then be provided on a housing 13 of any electrochemical energy storage device 5. The main difference is the second connection element 9. The second connection element 9 of the damage identification system 1 is a separate member and is not provided by the outer surface of the housing 13 itself. Therefore, the housing 13 might be fabricated from a material which is nonconductive. Another difference is the isolating member is 3, which finds predetermined breaking points such that no additional element is to appease the isolating member 3.

As soon as an external force 200 exceeds the predetermined value, the isolating member 3 collapses and allows connection between the first contact element 2 and the second contact element 9. Again, due to such a connection, damage of the electrochemical energy storage device 5 is identified.

Figure 6 is a diagram of the voltage of the first connection element 2 and the output voltage of the electrochemical energy storage device 5, which can be measured between the first terminal 14 and the second terminal 15. In this case, the second contact element 4, 9 is electrically connected to one of the electrodes of the jelly roll 6, i.e. to one of the terminals 14, 15. The first contact element 2 is connected to a floating potential. As soon as a logical unit measures a voltage between the first contact element 2 and of the other electrode of the jelly roll 6, which is not connected to the second contact element 4, 9, an electrical contact between the first contact element 2 and a second contact element 4, 9 must be present. Therefore, state voltage is an indication of damages within the damage identification system 1.

The voltage is plotted on the axis of ordinates and the time is plotted on the axis of abscissae in figure 6. It can be seen that the output voltage 300 of the electrochemical energy storage device 5 is constant until time 500 when penetration by nail 7 starts. The time 500 might also illustrate the external force 200 exceeding the predetermined value. Since the damage identification system 1 will be damaged first and electrochemical energy storage device 5 will be damaged afterwards, the voltage of the first contact element 2 which is denoted this reference numeral 400 will increase before the output voltage 300 drops due to short circuits caused by the damage. Hence, said increase 700 of the voltage 400 of the first contact element 2 indicates damage of the electrochemical energy storage device 5. This means, as soon as voltage 400 shows such an increase 700, countermeasures have to be started in order to avoid critical behavior of electrochemical energy storage device 5.

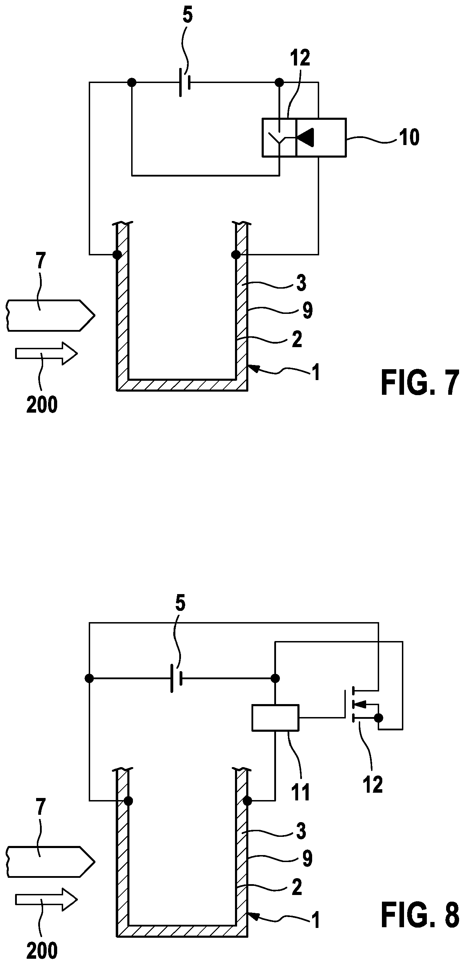

According to the invention, the voltage 400 is employed to power a logical unit 10, which is shown in figure 7. Figure 7 shows a damage identification system 1 according to a first embodiment of the invention. As can be seen, the logical unit 10, the electrochemical energy storage device 5, the first contact element 2, and the second contact element 9 set up a circuit for supplying power to the logical unit 10. This means, logical unit 10 will only be supplied with electric power in case a contact between the first contact element 2 and the second contact element 9 is established. Such a contact would only be present in case of damage. Therefore, logical unit 10 is adapted to start measures to avoid critical cell behavior of the electrochemical energy storage device 5. In the embodiment shown in figure 7, the logical unit 10 actuates a switch 12 for bridging the damaged electrochemical energy storage device 5. Therefore, the electrochemical energy storage device 5 is isolated such that a damage of the electrochemical energy storage device 5 will not have any influence to other energy sources like other electrochemical energy storage device. In an alternative solution, the unit 10 might activate a fast discharge device for discharging electrochemical energy storage device 5.

The logical unit 10 also might be a fast discharge device without further logical elements. The fast discharge device is adapted to shortcut the electrochemical storage device 5. In order to shortcut the electrochemical storage device 5, the discharge device has to be activated by an electrical voltage. Since the first contact element 2 is electrically connected to one terminal of the electrochemical energy storage device 5 and the discharge device is electrically connected to another terminal of the electrochemical energy storage device 5 as well as to the second contact element 9, the discharge device is only prevented from being activated due to the isolating member 3. In case of damage, the first contact element 2 and the second contact element 9 come into contact such that the discharge device is activated and discharges the electrochemical storage device 5. Hence, the discharge device, which helps to prevent catastrophic behavior of the electrochemical energy storage device 5 due to damage, is activated by the damage itself. No further logical elements are required.

Figure 8 is a view of a second embodiment including an alternative solution of logical unit 10. Again, figure 8 is a schematic view of damage identification system 1 according to the third embodiment. The difference to the first alternative shown in figure 7 is the logical unit 11. The logical unit 11 is adapted to actuate a switch 12 which again bridges the damaged electrochemical energy storage device 5. However, the logical unit 11 will not be operated with only energy from electrochemical energy storage device 5 but rather comprises an additional power source. This also allows actuating switches 12 which require higher energy than that of the electrochemical energy storage device 5 is able to provide. Such a design is preferable in case a fast discharge device is provided as a semiconductor device.

The above-mentioned embodiments might be combined. Particularly, the different designs of second contact element 4, 9 might be switched between the embodiments.

## Claims

1. Electrochemical energy storage device (5) comprising a damage identification system (1),
wherein said electrochemical energy storage device (5) includes a housing (13) at least part of which is made of electroconductive material and at least one battery cell, the battery cell being a jelly roll (6);
wherein said damage identification system (1) is provided on an outer surface of the jelly roll (6);
wherein said damage identification system (1) includes an electroconductive first contact element (2) and an electroconductive second contact element (4, 9) and an electrically isolating member (3) provided between the first contact element (2) and the second contact element (4, 9);
wherein the first contact element (2) and the second contact element (4, 9) have a plate like shape and are arranged in parallel to each other;
wherein the first contact element (2) and the second contact element (4, 9) are separated and/or electrically isolated from each other due to the isolating member (3);
wherein at least one outer surface of the housing (13) made of electroconductive material acts as the second contact element (4, 9) and said first contact element (2) is provided inside the housing (13);
wherein said damage identification system (1) includes a logical unit (10, 11) which is adapted to identify an electrical contact between the first contact element (2) and the second contact element (4, 9);
wherein the logical unit (10, 11) is arranged to identify a damage as soon as the electrical contact between the first contact element (2) and the second contact element (4, 9) is identified and to start countermeasures to avoid critical cell behavior of the electrochemical energy storage device (5);
wherein said battery cell and said first contact element (2) and said second contact element (4, 9) are connected to an open circuit for supplying electrical power to said logical unit (10, 11); and
wherein said open circuit can be closed due to the electrical contact between said first contact element (2) and said second contact element (4, 9).

2. Electrochemical energy storage device (5) according to claim 1, **characterized in that** the first contact element (2) and/or the second contact element (4, 9) are made of electroconductive foils.

3. Electrochemical energy storage device (5) according to any of the previous claims, **characterized in that** the isolating member (3) is constructed to collapse and allow contact between the first contact element (2) and the second contact element (4, 9) as soon as an external force exceeds a predetermined value.

4. Electrochemical energy storage device (5) according to any of the previous claims, **characterized in that** the logical unit (10, 11) comprises a fast discharge device for discharging the electrochemical energy storage device (5) and/or a bridging device for bridging the electrochemical energy storage device (5).

5. Electrochemical energy storage device (5) according to any one of claim 2 to 4, **characterized in that** the first contact element (2) or the second contact element (4, 9) are directly or via an electric resistance connected to one electrode of the jelly roll (6).

## Patentansprüche

1. Elektrochemische Energiespeichervorrichtung (5), die ein Beschädigungserkennungssystem (1) umfasst,
wobei die elektrochemische Energiespeichervorrichtung (5) ein Gehäuse (13), von dem mindestens ein Teil aus elektrisch leitendem Material besteht, und mindestens eine Batteriezelle aufweist, wobei die Batteriezelle ein Elektrodenwickel (6) ist;
wobei das Beschädigungsidentifizierungssystem (1) an einer Außenfläche des Elektrodenwickels (6) vorgesehen ist;
wobei das Beschädigungserkennungssystem (1) ein elektrisch leitendes erstes Kontaktelement (2) und ein elektrisch leitendes zweites Kontaktelement (4, 9) und ein elektrisch isolierendes Element (3), das zwischen dem ersten Kontaktelement (2) und dem zweiten Kontaktelement (4, 9) vorgesehen ist, aufweist;
wobei das erste Kontaktelement (2) und das zweite Kontaktelement (4, 9) eine plattenartige Form haben und parallel zueinander angeordnet sind;
wobei das erste Kontaktelement (2) und das zweite Kontaktelement (4, 9) aufgrund des isolierenden Elements (3) voneinander getrennt und/oder elektrisch isoliert sind;
wobei mindestens eine Außenfläche des Gehäuses (13), die aus elektrisch leitendem Material besteht, als das zweite Kontaktelement (4, 9) fungiert, und das erste Kontaktelement (2) innerhalb des Gehäuses (13) vorgesehen ist;
wobei das Beschädigungserkennungssystem (1) eine logische Einheit (10, 11) aufweist, die dazu angepasst ist, einen elektrischen Kontakt zwischen dem ersten Kontaktelement (2) und dem zweiten Kontaktelement (4, 9) zu erkennen;
wobei die logische Einheit (10, 11) dazu angeordnet ist, eine Beschädigung zu erkennen, sobald der elektrische Kontakt zwischen dem ersten Kontaktelement (2) und dem zweiten Kontaktelement (4, 9) erkannt ist, und Gegenmaßnahmen zu starten, um ein kritisches Zellverhalten der elektrochemischen Energiespeichervorrichtung (5) zu vermeiden;
wobei die Batteriezelle und das erste Kontaktelement (2) und das zweite Kontaktelement (4, 9) zu einem offenen Stromkreis verbunden sind, um die logische Einheit (10, 11) mit elektrischer Energie zu versorgen; und
wobei der offene Stromkreis aufgrund des elektrischen Kontakts zwischen dem ersten Kontaktelement (2) und dem zweiten Kontaktelement (4, 9) geschlossen werden kann.

2. Elektrochemische Energiespeichervorrichtung (5) nach Anspruch 1,
**dadurch gekennzeichnet, dass** das erste Kontaktelement (2) und/oder das zweite Kontaktelement (4, 9) aus elektrisch leitenden Folien bestehen.

3. Elektrochemische Energiespeichervorrichtung (5) nach einem der vorhergehenden Ansprüche, **dadurch gekennzeichnet, dass** das isolierende Element (3) so aufgebaut ist, dass es zusammenfällt und einen Kontakt zwischen dem ersten Kontaktelement (2) und dem zweiten Kontaktelement (4, 9) ermöglicht, sobald eine äußere Kraft einen vorgegebenen Wert überschreitet.

4. Elektrochemische Energiespeichervorrichtung (5) nach einem der vorhergehenden Ansprüche, **dadurch gekennzeichnet, dass** die logische Einheit (10, 11) eine Schnellentladungsvorrichtung zum Entladen der elektrochemischen Energiespeichervorrichtung (5) und/oder eine Überbrückungsvorrichtung zur Überbrückung der elektrochemischen Energiespeichervorrichtung (5) umfasst.

5. Elektrochemische Energiespeichervorrichtung (5) nach einem der Ansprüche 2 bis 4, **dadurch gekennzeichnet, dass** das erste Kontaktelement (2) oder das zweite Kontaktelement (4, 9) direkt oder über einen elektrischen Widerstand mit einer Elektrode des Elektrodenwickels (6) verbunden sind.

## Revendications

1. Dispositif de stockage d'énergie électrochimique (5) comprenant un système d'identification de dégât (1),
ledit dispositif de stockage d'énergie électrochimique (5) comportant un boîtier (13) dont au moins une partie est réalisée dans un matériau électro-conducteur et au moins une pile électrochimique, la pile électrochimique étant un enroulement Jelly Roll (6) ;
dans lequel ledit système d'identification de dégât (1) est fourni sur une surface externe du Jelly Roll (6) ;
dans lequel ledit système d'identification de dégât (1) comporte un premier élément de contact électro-conducteur (2) et un second élément de contact électro-conducteur (4, 9) et un élément électriquement isolant (3) fourni entre le premier élément de contact (2) et le second élément de contact (4, 9) ;
dans lequel le premier élément de contact (2) et le second élément de contact (4, 9) ont une forme de plaque et sont disposés parallèlement l'un à l'autre ;
dans lequel le premier élément de contact (2) et le second élément de contact (4, 9) sont séparés et/ou isolés électriquement l'un de l'autre par l'élément isolant (3) ;
dans lequel au moins une surface externe du boîtier (13) réalisée en un matériau électro-conducteur fait office de second élément de contact (4, 9) et ledit premier élément de contact (2) est fourni à l'intérieur du boîtier (13) ;
dans lequel ledit système d'identification de dégât (1) comporte une unité logique (10, 11) adaptée pour identifier un contact électrique entre le premier élément de contact (2) et le second élément de contact (4, 9) ;
dans lequel l'unité logique (10, 11) est conçue pour identifier un dégât aussitôt que le contact électrique entre le premier élément de contact (2) et le second élément de contact (4, 9) est identifié et lancer des contre-mesures pour éviter un comportement de pile critique du dispositif de stockage d'énergie électrochimique (5) ;
dans lequel ladite pile électrochimique et lesdits premier élément de contact (2) et second élément de contact (4, 9) sont connectés à un circuit ouvert pour fournir une puissance électrique à ladite unité logique (10, 11) ; et
dans lequel ledit circuit ouvert peut être fermé en raison du contact électrique entre ledit premier élément de contact (2) et ledit second élément de contact (4, 9).

2. Dispositif de stockage d'énergie électrochimique (5) selon la revendication 1, **caractérisé en ce que** le premier élément de contact (2) et/ou le second élément de contact (4, 9) sont réalisés dans des feuilles électro-conductrices.

3. Dispositif de stockage d'énergie électrochimique (5) selon l'une quelconque des revendications précédentes, **caractérisé en ce que** l'élément isolant (3) est construit pour s'affaisser et permettre le contact entre le premier élément de contact (2) et le second élément de contact (4, 9) dès qu'une force externe dépasse une valeur prédéterminée.

4. Dispositif de stockage d'énergie électrochimique (5) selon l'une quelconque des revendications précédentes, **caractérisé en ce que** l'unité logique (10, 11) comprend un dispositif de décharge rapide pour décharger le dispositif de stockage d'énergie électrochimique (5) et/ou un dispositif de pontage pour ponter le dispositif de stockage d'énergie électrochimique (5).

5. Dispositif de stockage d'énergie électrochimique (5) selon l'une quelconque des revendications 2 à 4, **caractérisé en ce que** le premier élément de contact (2) ou le second élément de contact (4, 9) est connecté directement ou par l'intermédiaire d'une résistance électrique à une électrode du Jelly Roll (6).
